# EUROPEAN PATENT APPLICATION

(11) **EP 4 600 776 A1**
(43) Date of publication of application: **13.08.2025**
(21) Application number: 24216968.8
(22) Date of filing: 02.12.2024
(51) Int. Cl.: G06F 1/16, G06F 1/20

(54) **HINGE DEVICE AND ELECTRONIC APPARATUS**

(30) Priority: 07.02.2024 JP 2024017160
(71) Applicant: Lenovo (Singapore) Pte. Ltd, New Tech Park 556741 (SG)
(72) Inventor: LIU, Yalu, Yokohama-shi, 220-0012 (JP)
(74) Representative: Openshaw & Co.

(57) **Abstract**

Provided is a hinge device that can obtain a suitable design in a closed state and can secure a gap of an appropriate width with a placement surface in an open state.

A hinge device connects a main body chassis and a display chassis to each other to be rotatably, and includes a first shaft that is pivotally supported by the main body chassis in the vicinity of a connection edge to the display chassis, a second shaft that is fixed to the display chassis in the vicinity of a connection edge to the main body chassis, a crank that connects the first shaft and the second shaft in a non-rotatable manner, a slider that is provided on the main body chassis to be slidable in a Y direction, and a link that pivotally supports the slider and pivotally supports the second shaft. As the main body chassis and the display chassis rotate from the closed state in which the main body chassis and the display chassis are stacked to the open state, a lower arc portion of the link protrudes from a lower surface of the main body chassis.

## Description

### BACKGROUND OF THE INVENTION

### Field of the Invention

The present invention relates to a hinge device that connects a first chassis and a second chassis to be rotatably, and an electronic apparatus in which the first chassis and the second chassis are connected to be rotatably by the hinge device.

### Description of the Related Art

A configuration in which a main body chassis and a display chassis are connected to each other to be relatively rotatable by a hinge device is used as an electronic apparatus such as a laptop PC. Usually, the main body chassis is used in a state of being placed on a desk, and a posture of the main body chassis does not change even though the display chassis is rotationally moved (Japanese Unexamined Patent Application Publication No. 2022-036805).

### SUMMARY OF THE INVENTION

In recent years, an electronic apparatus has been generating an increasing amount of heat with the improvement in performance of a CPU and the like, and thus more efficient cooling is required. In cooling the electronic apparatus, a fan is used, and an intake hole is often provided on a lower surface of the main body chassis. However, since a gap between the main body chassis and a placement surface such as the desk is narrow, an intake resistance is large. A leg portion made of rubber or the like is provided on the lower surface of the main body chassis, and the intake resistance can be reduced by increasing the height of the leg portion, but a large leg portion is not preferable in terms of design.

The present invention has been made in view of the above-described problems, and an object of the present invention is to provide a hinge device and an electronic apparatus that can obtain a suitable design in a closed state in which a first chassis and a second chassis are stacked and can secure a gap of an appropriate width with a placement surface in an open state.

In order to solve the above-described problems and achieve the object, a hinge device according to the first aspect of the present invention is a hinge device that rotatably connects a first chassis and a second chassis each having a flat shape, the hinge device includes: a first shaft configured to extend in a first direction along a connection edge between the first chassis and the second chassis, and be pivotally supported to be rotatably to the first chassis in a vicinity of the connection edge to the second chassis; a second shaft configured to extend in the first direction and be fixed to the second chassis in the vicinity of the connection edge to the first chassis; a crank configured to connect the first shaft and the second shaft in a non-rotatable manner; a slider configured to be provided on the first chassis to be slidable in a second direction orthogonal to the first direction; and a link configured to pivotally support the slider in the first direction and pivotally support the second shaft, in which as the first chassis and the second chassis rotate from a closed state in which the first chassis and the second chassis are stacked to an open state, the link protrudes from a non-facing surface of the second chassis in the closed state.

In addition, an electronic apparatus according to the second aspect of the present invention is an electronic apparatus in which a first chassis and a second chassis each having a flat shape are rotatably connected to each other by a hinge device, in which the hinge device includes: a first shaft configured to extend in a first direction along a connection edge between the first chassis and the second chassis, and be pivotally supported to be rotatably to the first chassis in a vicinity of the connection edge to the second chassis; a second shaft configured to extend in the first direction and be fixed to the second chassis in the vicinity of the connection edge to the first chassis; a crank configured to connect the first shaft and the second shaft in a non-rotatable manner; a slider configured to be provided on the first chassis to be slidable in a second direction orthogonal to the first direction; and a link configured to pivotally support the slider in the first direction and pivotally support the second shaft, and as the first chassis and the second chassis rotate from a closed state in which the first chassis and the second chassis are stacked to an open state, the link protrudes from a non-facing surface of the second chassis in the closed state.

The above-described aspects of present invention can obtain a suitable design with the link barely protruding, in the closed state in which the first chassis and the second chassis are stacked and can protrude in the open state to secure a gap of an appropriate width with a placement surface.

### BRIEF DESCRIPTION OF THE DRAWINGS

FIG. 1 is a schematic perspective view of an electronic apparatus including a hinge device according to an embodiment of the present invention as viewed obliquely from above.
FIG. 2 is a perspective view of a main body chassis and a display chassis in a closed state as viewed from a display chassis side.
FIG. 3 is a perspective view of the main body chassis and the display chassis in the closed state as viewed from a main body chassis side.
FIG. 4 is a perspective view of the hinge device and a peripheral portion thereof.
FIG. 5 is a perspective view of a state in which a cover is removed from FIG. 4.
FIG. 6 is a perspective view of a state in which a touch device is removed from FIG. 5.
FIG. 7 is a perspective view of a state in which a side plate and a peripheral wall are removed from FIG. 6.
FIG. 8 is a perspective view of an electronic apparatus according to a modification example.
FIG. 9 is a perspective view of the hinge device.
FIG. 10 is a perspective view of the hinge device in a state in which the side plate and the peripheral wall are removed from FIG. 9.
FIGS. 11A to 11D are schematic cross-sectional side views of the hinge device and the peripheral portion thereof, in which FIG. 11A is a view illustrating a state of 0 degrees, FIG. 11B is a view illustrating a state of 60 degrees, FIG. 11C is a view illustrating a state of 90 degrees, and FIG. 11D is a view illustrating a state of 135 degrees.
FIG. 12 is a schematic side view of the electronic apparatus in a maximum open state.

### DETAILED DESCRIPTION OF THE INVENTION

Hereinafter, embodiments of a hinge device and an electronic apparatus according to the present invention will be described in detail with reference to the drawings. It should be noted that the present invention is not limited to the embodiments. An embodiment of the present invention is a hinge device 10 and an electronic apparatus 12 including the hinge device 10.

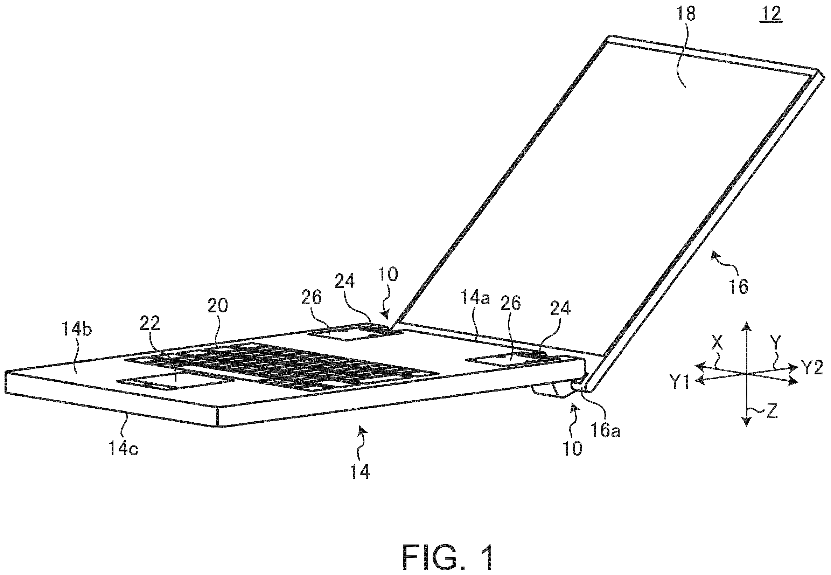

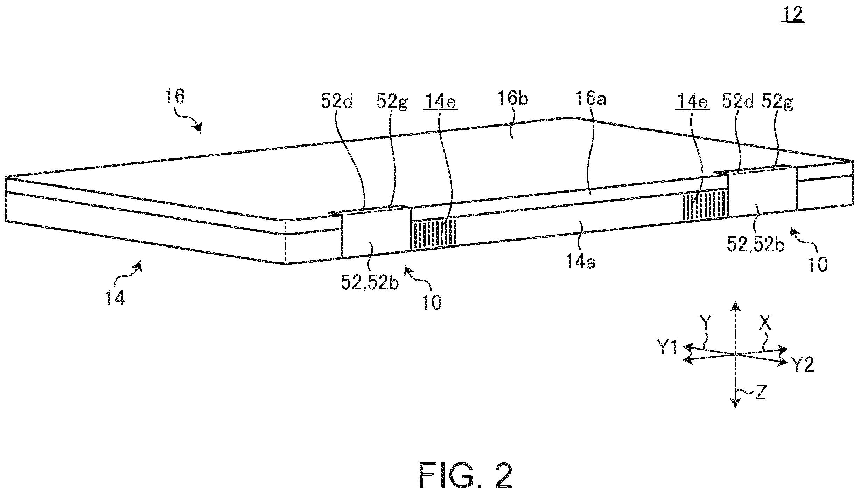

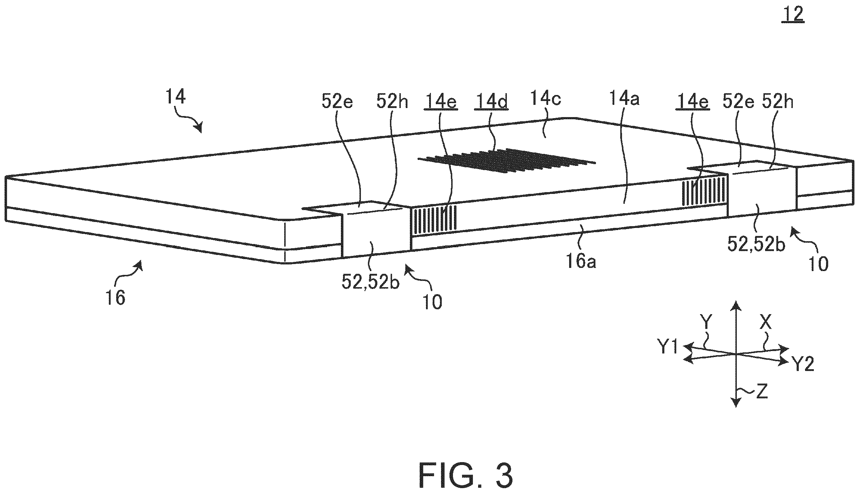

FIG. 1 is a schematic perspective view of the electronic apparatus 12 including the hinge device 10 according to the embodiment of the present invention as viewed obliquely from above. FIG. 2 is a perspective view of a main body chassis 14 and a display chassis 16 in a closed state as viewed from a display chassis 16 side. FIG. 3 is a perspective view of the main body chassis 14 and the display chassis 16 in the closed state as viewed from a main body chassis 14 side. The electronic apparatus 12 is a clamshell-shaped laptop PC in which the main body chassis 14 and the display chassis 16 are connected to be relatively rotatable by the hinge device 10. The electronic apparatus according to the present invention may be a fordable mobile phone, a smartphone, a portable game machine, or the like, in addition to the laptop PC. In the following description, a left-right direction as viewed from an operator with respect to the main body chassis 14 is also referred to as an X direction (first direction), a depth direction orthogonal to the X direction is also referred to as a Y direction (second direction), and an up-down direction orthogonal to the X direction and the Y direction is also referred to as a Z direction. In addition, a front in the Y direction is also referred to as a Y1 direction, and a rear is also referred to as a Y2 direction.

First, an overall configuration of the electronic apparatus 12 will be described. In the electronic apparatus 12, a rear end portion 14a that is a connection edge of the main body chassis 14 and a lower end portion 16a that is a connection edge of the display chassis 16 are connected to each other in an openable and closable manner by a pair of left and right hinge devices 10 and 10. The hinge device 10 may be installed in one or three or more, not in a pair of left and right.

The main body chassis 14 is a flat box formed of an upper cover material and a lower cover material. The main body chassis 14 has an upper surface 14b formed of the upper cover material and a lower surface 14c formed of the lower cover material. A keyboard 20 and a touch pad 22 are provided on the upper surface 14b of the main body chassis 14. Various electronic components such as a motherboard, a computing device such as a CPU, a memory, and a battery device are accommodated inside the main body chassis 14.

In addition, a cooling device including a fan is provided inside the main body chassis 14 in order to cool the computing device or the like. The fan sucks air from an intake hole (ventilation hole) 14d of the lower surface 14c and discharges air from an exhaust hole 14e of the rear end portion 14a. The cooling device receives heat of the computing device by a heat pipe and a vapor chamber, and transports a part or almost all of the heat to a heat sink, and the heat sink is adapted to dissipate heat by the fan.

The display chassis 16 is a flat box that is formed to be thinner than the main body chassis 14. A display 18 is provided on a front surface of the display chassis 16. The display 18 is, for example, a liquid crystal display, an organic light emitting diode (OLED) display, or the like. A closed state (refer to FIGS. 2 and 3) in which the main body chassis 14 and the display chassis 16 are at positions where a surface of the display 18 and a surface of the keyboard 20 face each other is defined as an opening and closing degree of 0 degrees. In the electronic apparatus 12 of the present example, a maximum opening and closing angle is 135 degrees (see FIG. 1). A state in which the main body chassis 14 and the display chassis 16 are stacked, and the opening and closing angle is 0 degrees is referred to as the closed state. A state in which the opening and closing angle is 135 degrees is referred to as a maximum open state. In the closed state, the upper surface 14b is a facing surface with the display chassis 16, and the lower surface 14c opposite thereto is a non-facing surface.

As illustrated in FIG. 3, the lower surface 14c of the main body chassis 14 is basically not provided with leg portions, and the entire surface is almost flat, and a suitable design is realized particularly in the closed state. However, a small leg portion that does not impair the designability may be provided. The electronic apparatus 12 without a large leg portion is suitable for carrying in a bag or the like.

Next, a specific configuration example of the hinge device 10 and a peripheral portion thereof will be described.

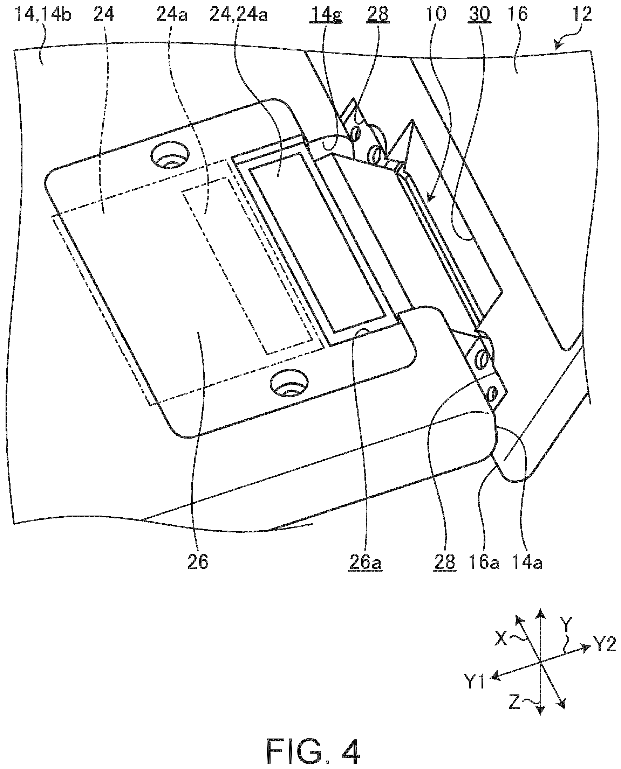

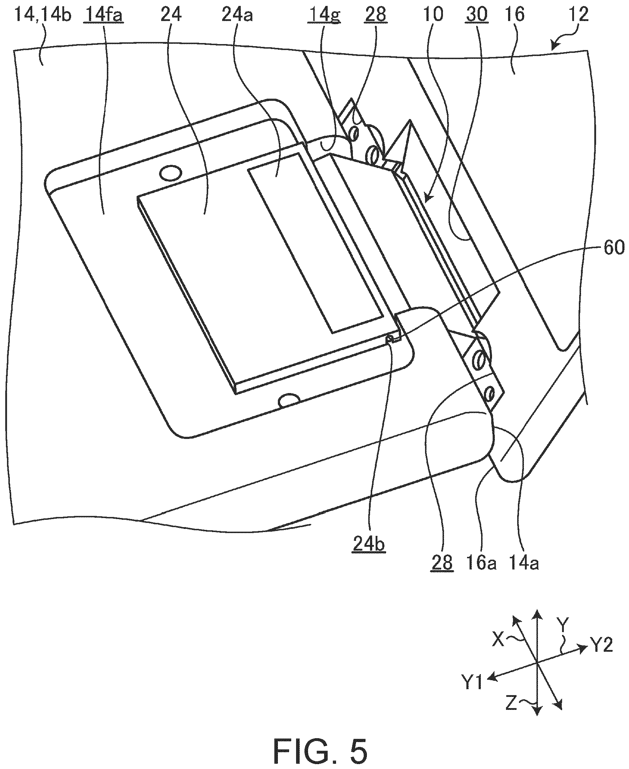

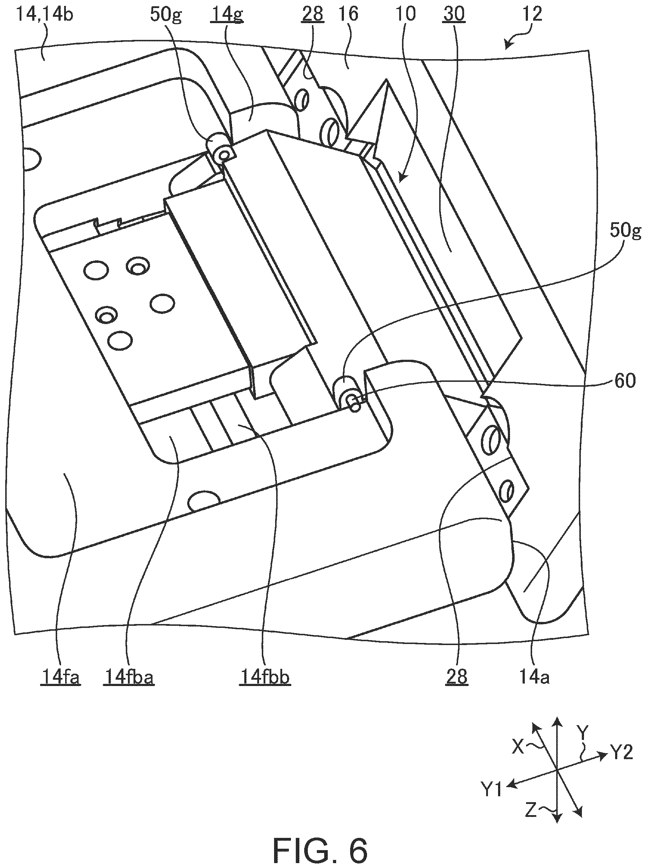

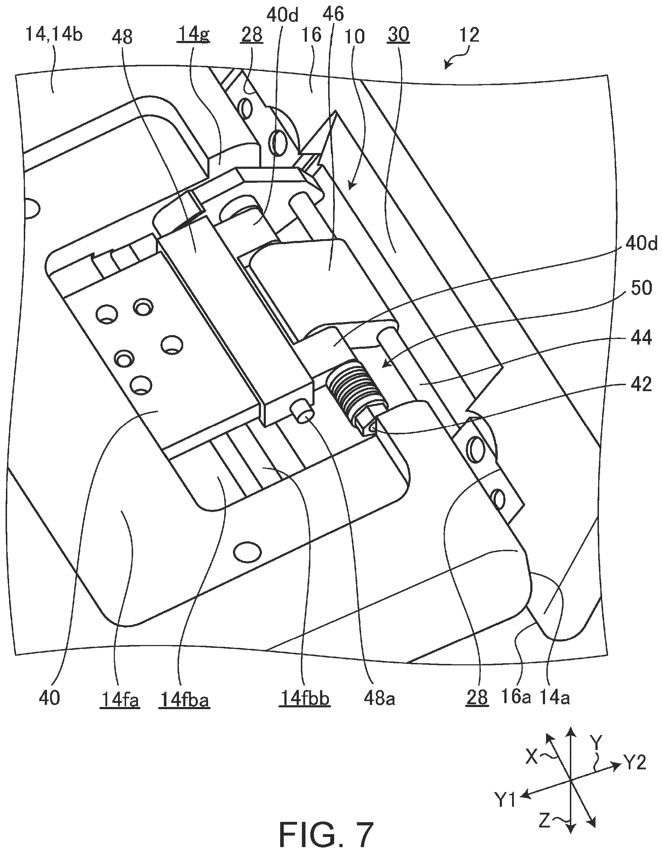

FIG. 4 is a perspective view of the hinge device 10 and the peripheral portion thereof. FIG. 5 is a perspective view of a state in which a cover 26 is removed from FIG. 4. FIG. 6 is a perspective view of a state in which a touch device 24 is removed from FIG. 5. FIG. 7 is a perspective view of a state in which a right side plate 56 and a peripheral wall 58 are removed from FIG. 6. FIGS. 4 to 7 illustrate the maximum open state. Since the left and right hinge devices 10 have the same configuration that is left-right symmetric, one hinge device 10 will be described below, and the other hinge device 10 will not be described.

The hinge device 10 is provided in the vicinity of one end in the X direction in the electronic apparatus 12 to pass through a notch 14g of the end portion on the Y2 side from the main body chassis 14, over the display chassis 16. Two countersinking 28 and an escape portion 30 are formed at the lower end portion 16a of the display chassis 16. The countersinking 28 is a portion to which a bracket 44a described below is attached. The escape portion 30 is a recessed portion that avoids interference with a link 52 described later in the closed state, and has an acute cross-sectional shape that becomes deeper as approaching the lower end portion 16a.

A rectangular recessed portion 14f communicating with the notch 14g is formed on the upper surface 14b of the main body chassis 14. The recessed portion 14f is configured of a first recessed portion 14fa and a second recessed portion 14fb having different depths. The first recessed portion 14fa is a recessed portion that is slightly closer to the Y1 side than the rear end portion 14a, is formed to surround three sides of the second recessed portion 14fb, and has a width larger than the width of the notch 14g.

The second recessed portion 14fb is slightly deeper than the first recessed portion 14fa, has the same width as the notch 14g, and communicates with the rear end portion 14a through the notch 14g. The width of the second recessed portion 14fb in the Y direction is about 1/2 of the width of the first recessed portion 14fa in the Y direction. The second recessed portion 14fb is formed of a fixed base 14fba on the Y1 side and a slider passage portion 14fbb on the Y2 side with a step as a boundary. The fixed base 14fba is a portion to which a base plate 40, which will be described later, is fixed, and is slightly deeper than the width of the base plate 40 in the Z direction. The slider passage portion 14fbb is slightly deeper than the fixed base 14fba so that a slider 48, which will be described later, can pass therethrough.

The first recessed portion 14fa is provided with a touch device (input/output device) 24 that is slid and displaced in the Y direction together with a pin 60 provided in the link 52 described below. An engagement groove 24b (see FIG. 5) with the pin 60 is formed on the lower surface of the touch device 24. The engagement groove 24b is slightly long in the Z direction to correspond to the rotational operation of the pin 60. The touch device 24 has a thin shape, has a rectangular shape slightly wider than the second recessed portion 14fb, and covers the second recessed portion 14fb by being displaced to the Y2 side in the maximum open state. An operation portion 24a that is long in the X direction is provided on a Y2-side portion of the touch device 24. For example, various icons (not illustrated) are displayed on the operation portion 24a of the touch device 24, and predetermined processing is performed by a touch operation on these icons.

The first recessed portion 14fa is covered with the cover 26. A notch 26a that exposes the operation portion 24a in the maximum open state is formed on the Y2 side of the cover 26. In the operation portion 24a, for example, almost all the portions are exposed from the notch 26a even in a case in which the opening and closing angle is about 120 degrees. As illustrated by a virtual line in FIG. 4, the touch device 24 is displaced to the Y1 side in the first recessed portion 14fa in the closed state. In this case, the operation portion 24a is covered and protected by the cover 26. The cover 26 forms a continuous surface with the upper surface 14b.

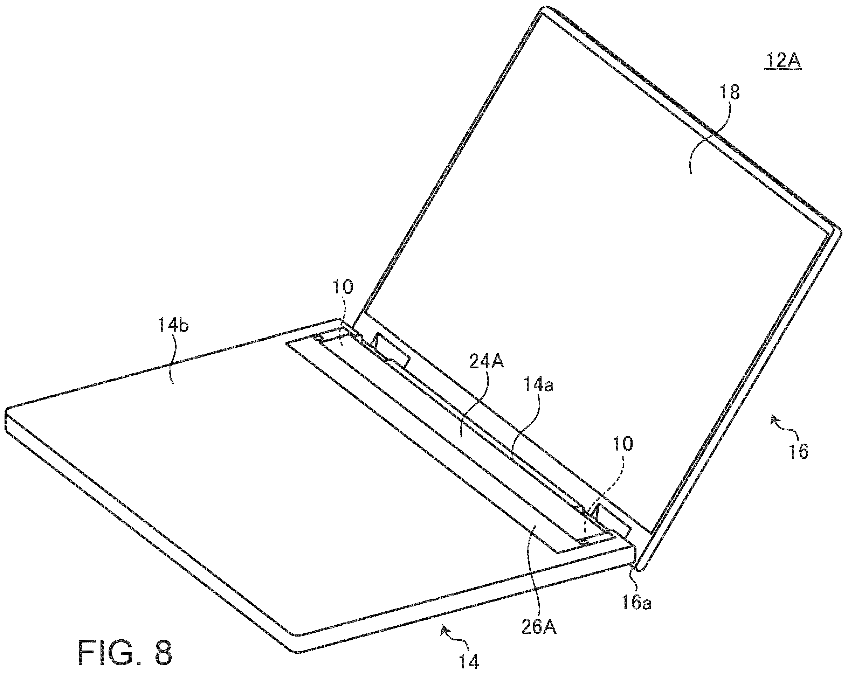

FIG. 8 is a perspective view of an electronic apparatus 12A according to a modification example. In FIG. 8, the keyboard and the touch panel are omitted. In the electronic apparatus 12, the relatively small touch device 24 is provided for each of the two left and right hinge devices 10. On the other hand, one touch device 24A provided in the electronic apparatus 12A is set to be long in the X direction over the two left and right hinge devices 10. Similarly to the touch device 24, a touch device 24A slides in the Y direction by the opening and closing operation of the display chassis 16. A recessed portion formed on the upper surface 14b and on which the touch device 24A slides, and a cover 26A that covers approximately half of the recessed portion on the Y1 side are formed to be long in the X direction. In the closed state, the touch device 24A is covered with the cover 26A. An input/output device that performs a sliding operation under the action of the hinge device 10 is not limited to the touch devices 24 and 24A, and may be, for example, a microphone, a speaker, or the like.

The hinge device 10 will be further described with reference to FIGS. 6 to 10.

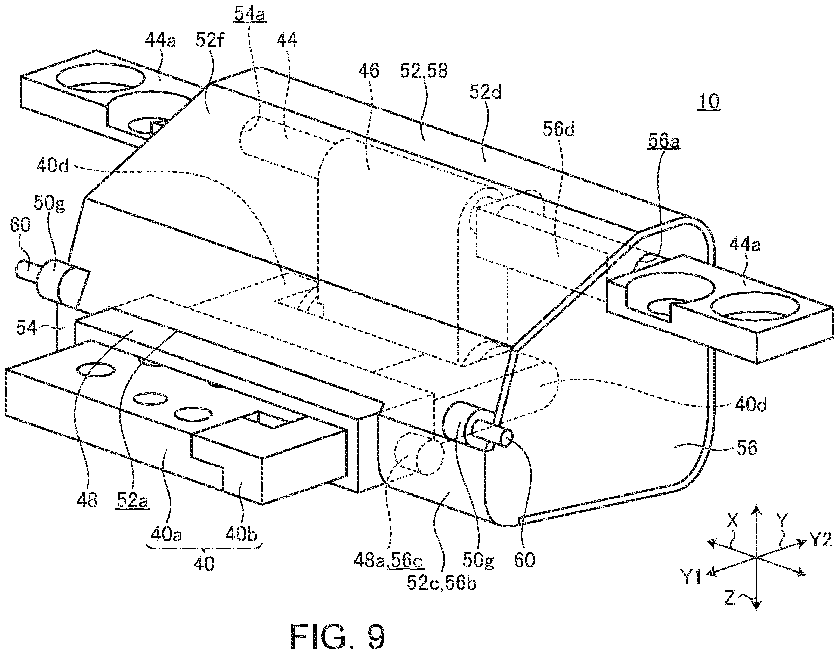

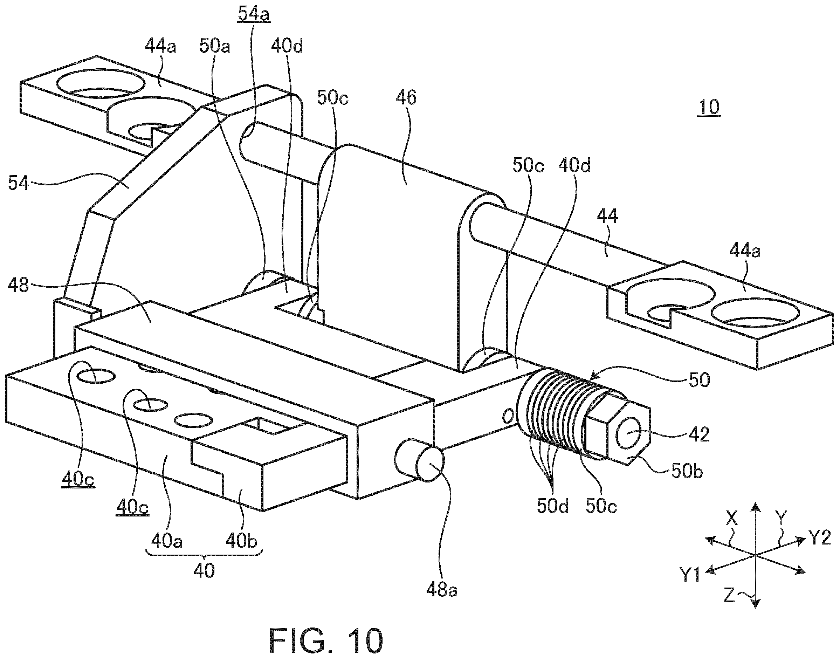

FIG. 9 is a perspective view of the hinge device 10. FIG. 10 is a perspective view of the hinge device 10 in a state in which the side plate 56 and the peripheral wall 58 are removed. FIGS. 9 and 10 illustrate the hinge device 10 in the closed state. The hinge device 10 includes a base plate 40, a first shaft 42, a second shaft 44, a crank 46, a slider 48, a torque applying portion 50, and a link 52. The hinge device 10 constitutes a kind of slider-crank mechanism by the crank 46, the slider 48, and the link 52.

The base plate 40 is configured by a first member 40a on the left and a second member 40b on the right being engaged with each other for convenience of assembly. A width of the first member 40a in the Y direction is larger than that of the second member 40b. A plurality of screw holes 40c is formed in the base plate 40 in the vicinity of the end portion on the Y1 side, and this portion is screw-fixed to the fixed base 14fba, and the other portion protrudes in the Y2 direction in a state in which a gap is secured with respect to the slider passage portion 14fbb. An axis support portion 40d that pivotally supports the first shaft 42 to be rotatably protrudes from both ends of the end portions of the base plate 40 on the Y2 side. That is, the first shaft 42 is pivotally supported by the main body chassis 14 via the base plate 40. The first shaft 42 extends in the X direction within a range of the notch 14g in the vicinity of the rear end portion 14a. A male screw is formed at a right end portion of the first shaft 42. The width in the X direction and the width in the Y direction of the base plate 40 excluding the axis support portion 40d in the present example are substantially equal to each other.

The second shaft 44 is parallel to and aligned with the first shaft 42, and is fixed to the display chassis 16 in the vicinity of the lower end portion 16a by screwing the brackets 44a provided at both ends into the countersinking 28. The first shaft 42 is present in a relatively lower portion of the main body chassis 14, and an inter-axis distance between the first shaft 42 and the second shaft 44 is appropriately long.

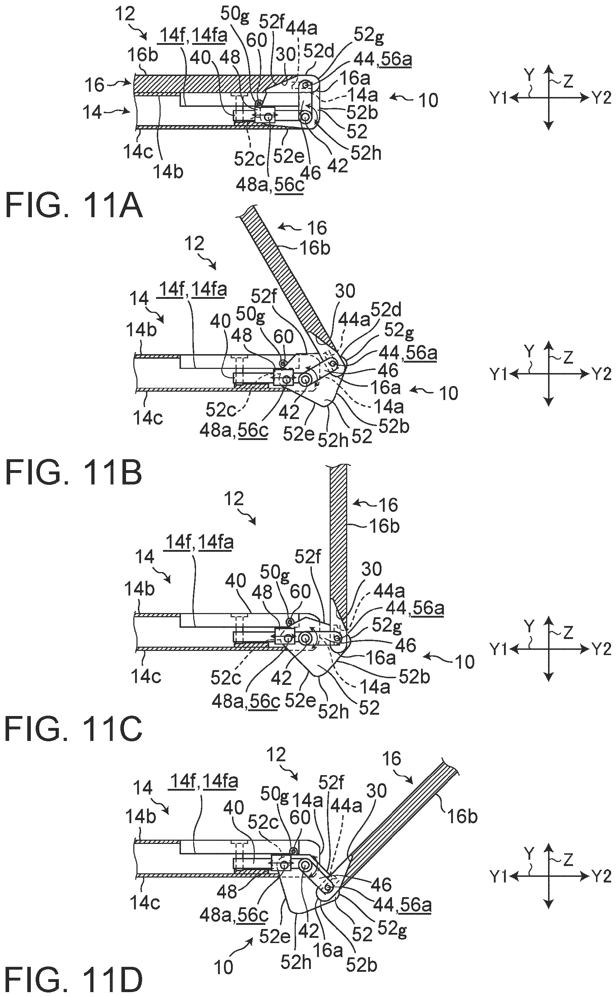

The crank 46 has an oval shape and is provided between two axis support portions 40d, and the first shaft 42 and the second shaft 44 are fitted and connected to each other by a predetermined non-rotation fastening unit at both ends thereof in a non-rotatable manner. An angle formed between the crank 46 and the display chassis 16 is almost 90 degrees (see FIG. 11), and the crank 46 is oriented along the Z direction in the closed state.

The slider 48 has a rectangular shape in front view, is fitted to the base plate 40 with substantially no gap, surrounds the base plate 40, and is slidable in the Y direction in a range facing the slider passage portion 14fbb. The slider 48 is on the Y1 side of the first shaft 42 and slides to approach and separate from the first shaft 42. The base plate 40 has both a function of guiding the slider 48 to be slidable and a function of pivotally supporting the first shaft 42, which are reasonable, but the two functional portions may be separate bodies. A short axis 48a protrudes from both ends of the slider 48 in the X direction (only the right is illustrated in FIG. 10). The slider 48 has an appropriate width in the Y direction to be easily slid.

The torque applying portion 50 applies a rotational torque caused by friction to the first shaft 42 to maintain the display chassis 16 at an optional angle, and has a flange 50a at a left end portion of the first shaft 42, a nut 50b that is screwed with a male screw at a right end portion of the first shaft 42, and a plurality of fixed washers 50c and disks 50d that are fitted to the first shaft 42 therebetween. The disk 50d is a plate spring formed of a dish-shaped metal plate, and the plurality of the disks 50d is stacked between the nut 50b and the right axis support portion 40d via the fixed washer 50c. The fixed washer 50c is also provided between the two axis support portions 40d and the crank 46. The fixed washer 50c is made non-rotatable with respect to the first shaft 42 by a predetermined non-rotation fastening unit. The torque applying portion 50 generates a frictional force in the axial direction with respect to the first shaft 42 by causing the first shaft 42 to generate an axial force by tightening the nut 50b and causing the disk 50d to be elastically compressed. It is preferable to perform a locking process on the nut 50b.

The link 52 will be described with reference to FIGS. 2, 3, 9, and 10 illustrating the closed state. The link 52 is mainly configured of a left side plate 54, a right side plate 54, and the peripheral wall 58. The peripheral wall 58 has a tubular shape of an irregular pentagonal shape in a horizontal direction. The side plates 54 and 56 are fitted to and close left and right opening portions of the peripheral wall 58. The peripheral wall 58 does not reach the lower portion on the Y1 side, and an opening 52a through which the slider 48 can be inserted is formed.

Shaft axis holes 54a and 56a that pivotally support the second shaft 44 to be rotatable are formed in the vicinity of the upper end of the side plates 54 and 56 on the Y2 side. A bulging portion 56b facing inward is formed in the lower portion of the side plate 56 on the Y1 side. The bulging portion 56b secures an arrangement space of the nut 50b, the fixed washer 50c, and the disk 50d of the torque applying portion 50.

A slider axis hole 56c that pivotally supports the axis 48a of the slider 48 in the X direction on the right surface is formed on an inner surface of the bulging portion 56b. Although not illustrated, a slider axis hole to which the axis 48a of the slider 48 in the X direction on the left surface is pivotally supported is formed at the same position in the left side plate 54. That is, the link 52 pivotally supports the slider 48 in the X direction and pivotally supports the second shaft 44.

In the present example, the inter-axis distance between the axis 48a and the first shaft 42 in the closed state is about 1.5 times the inter-axis distance between the first shaft 42 and the second shaft 44. The width of the link 52 in the Y direction is about twice the inter-axis distance between the first shaft 42 and the second shaft 44 in the present example. The link 52 does not pivotally support the first shaft 42.

The slider axis hole 56c has a bottomed shape corresponding to the short axis 48a, but may be a through-hole. The axis 48a may be provided on the side plates 54 and 56, and the slider axis hole 56c may be provided on the slider 48. The side plate 56 is provided with an L-shaped member 56d that protrudes inward. An axis hole into which the second shaft 44 is inserted is formed in a distal end bent portion of the L-shaped member 56d, and the second shaft 44 is assisted to be pivotally supported in the vicinity of the crank 46.

The link 52 is mainly formed of five surfaces by the peripheral wall 58. That is, a rear surface 52b, a front surface 52c, an upper surface 52d, a lower surface 52e, and an inclined surface 52f are provided.

The rear surface 52b forms a continuous surface with the rear end portion 14a of the main body chassis 14 and the lower end portion 16a of the display chassis 16 in the closed state. The upper surface 52d and an upper arc portion 52g between the rear surface 52b and the upper surface 52d form a continuous surface with a back surface cover 16b on a side opposite to the display surface of the display chassis 16. A lower arc portion 52h between the rear surface 52b and the lower surface 52e forms a continuous surface with a lower cover material of the main body chassis 14. As described above, the link 52 has an integral appearance that is continuous with the main body chassis 14 and the display chassis 16 in the closed state, which is suitable for design. The lower arc portion 52h has a moderately gentle arc shape.

The upper surface 52d has a shorter width in the Y direction than the lower surface 52e and is about 1/3 in the present example, and thus is relatively inconspicuous. The gentle inclined surface 52f is provided between the upper surface 52d and the front surface 52c. The inclined surface 52f and the escape portion 30 (see FIG. 11A) face each other with the same inclination angle and substantially without a gap in the closed state. The lower surface 52e is slightly inclined upward toward the Y1 side in order to avoid interference with other members such as the cover.

An upper half of the front surface 52c is slightly inclined toward the Y2 side. Small pin bases 50g are provided to protrude at left and right both ends of the inclined portion on the front surface 52c. The pin 60 protrudes from each of the two pin bases 50g in a direction away from each other. Each pin 60 is fitted into the engagement groove 24b (see FIG. 5) formed on the lower surface of the touch device 24, and drives the touch device 24 to slide. A unit that drives the touch device 24 to slide may be provided in the slider 48.

FIGS. 11A to 11D are schematic cross-sectional side views of the hinge device 10 and the peripheral portion thereof, in which FIG. 11A is a view illustrating a state of 0 degrees, that is, a closed state, FIG. 11B is a view illustrating a state of 60 degrees, FIG. 11C is a view illustrating a state of 90 degrees, and FIG. 11D is a view illustrating a state of 135 degrees, that is, the maximum open state.

As illustrated in FIG. 11A, the second shaft 44 is directly above the first shaft 42 in the closed state. In this case, the slider 48 is displaced furthest to the Y1 side. The link 52 is within a contour range of the main body chassis 14 and the display chassis 16, and the lower arc portion 52h coincides with a contour portion of the main body chassis extending from the lower surface 14c to the rear end portion 14a. However, under some conditions, a part of the link 52 may slightly protrude from the lower surface 14c.

As illustrated in FIG. 11B, when the opening and closing angle is 60 degrees, the second shaft 44 moves to the position of 60 degrees in a clockwise direction from the closed state position with the first shaft 42 as a rotation reference, is displaced in the Y2 direction by the same amount, and is displaced downward. Since the link 52 is pivotally supported by the second shaft 44 at a portion of the shaft axis hole 56a, the link 52 is displaced in the Y2 direction and downward while rotating. In addition, the link 52 pivotally supports the axis 48a of the slider 48 through the slider axis hole 56c, but the slider 48 can slide in the Y direction but cannot be displaced in the Z direction, and thus the slider 48 is displaced to be pulled in the Y2 direction by the second shaft 44. Therefore, the link 52 appears to be displaced in the Y2 direction while rotating about the axis 48a of the slider 48 as a reference. Then, the lower arc portion 52h is displaced in the Y2 direction and downward to protrude from the lower surface 14c of the main body chassis 14.

As illustrated in FIG. 11C, when the opening and closing angle is 90 degrees, the second shaft 44 moves to the position of 90 degrees in the clockwise direction from the closed state position with the first shaft 42 as the rotation reference, is displaced in the Y2 direction by the same amount, and is displaced downward. The link 52 is displaced in the Y2 direction and downward while rotating with the axis 48a of the slider 48 as the reference. In this case, the second shaft 44 and the slider 48 are maximally displaced in the Y2 direction. The lower arc portion 52h protrudes further downward than a case in which the opening and closing angle is 60 degrees. The lower arc portion 52h at this time is in an approximately 40 degrees counterclockwise side from the vertical downward with the axis 48a as the reference.

As illustrated in FIG. 11D, in a case of the maximum open state, the second shaft 44 moves to the position of 135 degrees in a clockwise direction from the closed state position with the first shaft 42 as the rotation reference, is displaced downward by the same amount, and returns slightly in the Y1 direction. The link 52 is displaced downward while rotating with the axis 48a of the slider 48 as the reference and returns slightly in the Y1 direction. The lower arc portion 52h is displaced in the clockwise direction from the state of the opening and closing angle of 90 degrees, and in the present example, the lower arc portion 52h protrudes further downward at a position of an about 15 degrees counterclockwise side from vertical downward with the axis 48a as the reference.

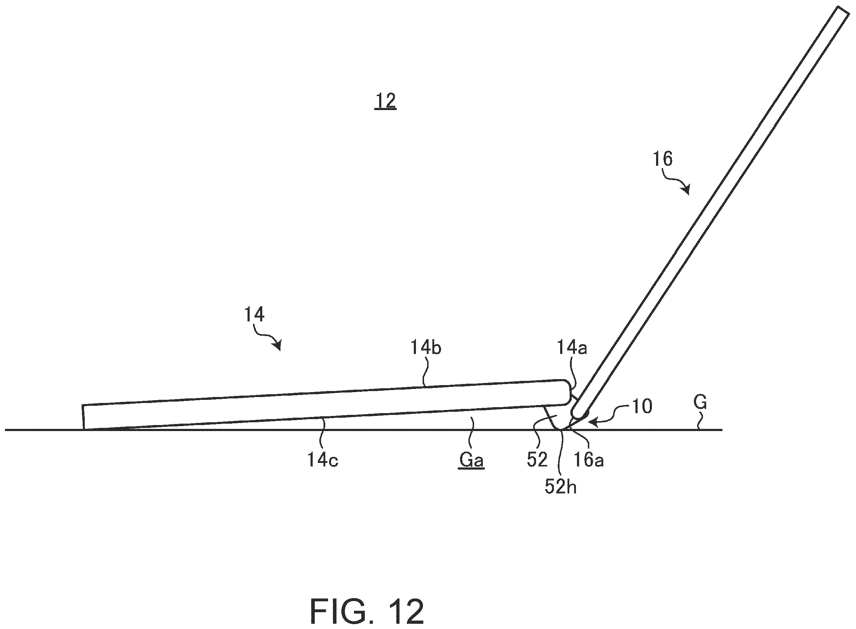

FIG. 12 is a schematic side view of the electronic apparatus 12 in the maximum open state. In the maximum open state, the lower arc portion 52h of the link 52 protrudes appropriately downward from the lower surface 14c of the main body chassis 14 at the lower portion of the rear end portion 14a. Therefore, the main body chassis 14 has an appropriate rear upward inclination. In the present example, the inclination is about 2 to 3 degrees with a placement surface G as the reference.

The main body chassis 14 is inclined, so that a gap Ga having an appropriate width is secured between the lower surface 14c and the placement surface G, and the intake resistance from the intake hole 14d (see FIG. 3) can be reduced. In addition, an appropriate inclination of the main body chassis 14 facilitates typing on the keyboard 20. The lower arc portion 52h has a gentle arc shape and is suitable for placement. Since the hinge device 10 has a configuration in which the link 52 that substantially constitutes a part of the frame protrudes downward to lift the main body chassis 14, the hinge device 10 is called a frame lift-up hinge.

The present invention is not limited to the above-described embodiments, and there is no doubt that the present invention can be freely changed without departing from the gist of the present invention.

### Description of Symbols

10 hinge device
12, 12A electronic apparatus
14 main body chassis
14a rear end portion (connection edge)
14b upper surface (facing surface)
14c lower surface (non-facing surface)
14d intake hole (ventilation hole)
16 display chassis
16a lower end portion
16b back surface cover
18 display
20 keyboard
24, 24A touch device (input/output device)
26, 26A cover
40 base plate
42 first shaft
44 second shaft
46 crank
48 slider
48a axis
50 torque applying portion
52 link
52d upper surface
52e lower surface
52h lower arc portion
54, 56 side plate
54a, 56a shaft axis hole
56c slider axis hole
58 peripheral wall
60 pin

## Claims

1. A hinge device (10) configured to rotatably connect a first chassis (14) and a second chassis (16) each comprising a flat shape, the hinge device comprising:
a first shaft (42) configured to extend in a first direction along a connection edge (14a) between the first chassis and the second chassis, and be pivotably supported to be rotatable relative to the first chassis in a vicinity of the connection edge to the second chassis;
a second shaft (44) configured to extend in the first direction and be fixed to the second chassis in the vicinity of the connection edge to the first chassis;
a crank (46) configured to connect the first shaft and the second shaft in a non-rotatable manner;
a slider (48) configured to be provided on the first chassis to be slidable in a second direction orthogonal to the first direction; and
a link (52) configured to pivotably support the slider in the first direction and pivotably support the second shaft,
wherein as the first chassis and the second chassis rotate from a closed state in which the first chassis and the second chassis are stacked to an open state, the link is configured to protrude from a non-facing surface (14c) of the second chassis in the closed state.

2. The hinge device according to claim 1, further comprising:
a base plate (40) configured to be fixed to the first chassis, guide the slider to be slidable, and pivotably support the first shaft.

3. The hinge device according to claim 2,
wherein the base plate has two axis support portions (40d) that pivotably support the first shaft, and
the crank is provided between the two axis support portions.

4. The hinge device according to claim 2 or claim 3, wherein the slider has a rectangular shape surrounding the base plate.

5. The hinge device according to any preceding claim, further comprising:
an input/output device (24, 24A) configured to slide in the second direction together with the slider or a vicinity of an axis support portion of the slider in the link,
wherein the input/output device is covered with a cover (26, 26A) in the closed state and is exposed from the cover in the open state.

6. The hinge device according to any preceding claim,
wherein the link forms a continuous surface with a surface of the connection edge in the closed state.

7. The hinge device according to any preceding claim,
wherein a torque applying portion (50) configured to apply a rotational torque is provided on the first shaft.

8. An electronic apparatus (12, 12A) in which a first chassis (14) and a second chassis (16) each comprising a flat shape are rotatably connectable to each other by a hinge device (10),
wherein the hinge device includes
a first shaft (42) configured to extend in a first direction along a connection edge (14a) between the first chassis and the second chassis, and be pivotably supported to be rotatable relative to the first chassis in a vicinity of the connection edge to the second chassis,
a second shaft (44) configured to extend in the first direction and be fixed to the second chassis in the vicinity of the connection edge to the first chassis;
a crank (46) configured to connect the first shaft and the second shaft in a non-rotatable manner,
a slider (48) configured to be provided on the first chassis to be slidable in a second direction orthogonal to the first direction, and
a link (52) configured to pivotably support the slider in the first direction and pivotably support the second shaft, and
as the first chassis and the second chassis rotate from a closed state in which the first chassis and the second chassis are stacked to an open state, the link is configured to protrude from a non-facing surface (14c) of the second chassis in the closed state.

9. The electronic apparatus according to claim 8, wherein a keyboard (20) is provided on a facing surface (14b) of the first chassis with respect to the second chassis, and a ventilation hole (14d) is provided on the non-facing surface.
